# EUROPÄISCHE PATENTSCHRIFT

(11) **EP 1 641 808 B1**
(45) Veröffentlichungstag und Bekanntmachung des Hinweises auf die Patenterteilung: **16.09.2009**
(21) Anmeldenummer: 03817397.7
(22) Anmeldetag: 08.07.2003
(51) Int. Cl.: C07F 15/00

(54) **VERFAHREN ZUR HERSTELLUNG VON CHLOROTRIS (TRIPHENYLPHOSPHAN)RHODIUM (I)**
METHOD FOR PRODUCING CHLOROTRIS(TRIPHENYLPHOSPHINE) RHODIUM (I)
PROCEDE DE PRODUCTION DE CHLOROTRIS(TRIPHENYLPHOSPHANE)RHODIUM (I)

(43) Veröffentlichungstag der Anmeldung: 05.04.2006
(73) Patentinhaber: W.C. Heraeus GmbH, 63450 Hanau (DE)
(72) Erfinder: WALTER, Richard, 63755 Alzenau (DE); MEYER, Horst, 63674 Altenstadt (DE)
(74) Vertreter: Kühn, Hans-Christian
(86) Internationale Anmeldenummer: PCT/EP2003/007292
(87) Internationale Veröffentlichungsnummer: WO 2005/005448

(56) Entgegenhaltungen:
- OSBORN J.A.: "Inorganic Syntheses" 1967, MC GRAW-HILL BOOK CO. , NEW YORK 10 , XP0008027654 in der Anmeldung erwähnt Seite 67 - Seite 71
- OSBORN J.A.: "Inorganic Syntheses" 1990, MC GRAW-HILL BOOK CO. , NEW YORK 28 , XP0008027655 in der Anmeldung erwähnt Seite 77 - Seite 79
- SUGGS J.W. ET AL.: "Synthesis, structure, and ligand-promoted reductive elimination in an acylrhodium ethyl complex" ORGANOMETALLICS., Bd. 4, Nr. 6, 1985, Seiten 1101-1107, XP002272201 USACS, COLUMBUS, OH.

## Beschreibung

Die Erfindung betrifft Verfahren zur Herstellung von Chlorotris(triphenylphosphan)-rhodium(I). Diese Verbindung ist als "Wilkinson Katalysator" bekannt geworden und wird bei einer Vielzahl von industriellen Prozessen, vor allem Hydrierungen und Hydroformylierungen, eingesetzt. Die bekannteste Methode zu ihrer Herstellung stammt von Sir Geoffrey Wilkinson selbst und hat Eingang in das Standardwerk "Inorganic Syntheses" gefunden [Inorg. Synth 10, 67 (1967) und gleichlautend Inorg. Synth 28, 77 (1990)]. Nach diesem Verfahren wird RhCl₃-Hydrat mit Überschuss Triphenylphosphin in Ethanol umgesetzt und die Verbindung in einer Ausbeute von 88 %, bezogen auf eingesetztes Rhodium, erhalten.

Es wurde nun gefunden, dass man das Verfahren sowohl hinsichtlich der Ausbeute als auch hinsichtlich der Qualität des Produkts entscheidend verbessern kann. Überraschenderweise beeinflusst die Temperaturführung bei der Reaktion die Qualität des Produkts direkt und reproduzierbar.

Bei der großtechnischen Herstellung des Wilkinson Katalysators kommt es darauf an, dass man ein kristallines Produkt erhält, das gut filtrierbar ist. Insofern sind zu kleine Kristalle unbrauchbar, weil sie Filtriermittel wie Filter, Nutschen oder Fritten verstopfen oder die Kristalle durch das Filter nicht zurückgehalten werden können. Es wurde gefunden, dass die Kristallgröße überraschenderweise durch Temperatur- und Lösemittel einstellbar ist.

Die Erfindung betrifft somit ein Verfahren zur Herstellung von Chlorotris(triphenylphosphan)rhodium(I) durch Umsetzung von RhCl₃-Lösung mit Triphenylphosphin
in Gemischen eines C2-C5 Alkohols mit Wasser
anschließendes Abkühlen und Filtrieren des erhaltenen kristallinen Niederschlags, wobei, die Mischung der Reaktanden
- **AB**: 3/2 bis mehrere Stunden von Zimmertemperatur auf 68-79°C erwärmt wird, wo- bei ein Farbumschlag nach weinrot stattfindet, und die Mischung
- **C**: bei 80 bis 110°C gehalten wird wobei bei Verwendung von Ethanol als Lösungs- mittel die obere Temperaturgrenze 78°C beträgt. Der Umschlagspunkt in Rich- tung einer weinroten Lösung zeigt, dass die Reaktion zur Gänze stattgefunden hat.

Die Mischung der Reaktanden kann auch in der Weise behandelt werden, dass
- **A**: in einer ersten Stufe auf 25 - 35°C erwärmt wird,
- **B**: weiter in einer zweiten Stufe von 25 - 35°C auf 68 - 79° erwärmt wird, wobei ein Farbumschlag nach weinrot stattfindet,
- **C**: bei 80 bis 110°C gehalten wird, wobei bei Verwendung von Ethanol als Lö- sungsmittel die obere Temperaturgrenze 78°C beträgt.

Bevorzugt beträgt die Dauer der einzelnen Stufen: **A** etwa ½ - 1 h, **B** etwa 1 - 4 h und **C** etwa ½- 1 h. Dabei sind die Grenzen flexibel aufzufassen, das heißt z.B. +/- 10 Minuten bei der halben Stunde und +/- 30 Minuten bei 4 Stunden. Man wird allerdings versuchen, die Dauer der Stufen aus ökonomischen Gründen nicht zu lang zu gestalten.

Bevorzugt wird bei Schritt **B** derart langsam erwärmt, dass der Farbumschlag der Lösung nach dunkelrot bei einer möglichst hohen Temperatur, vorzugsweise bei etwa 68-79 °C, stattfindet.

Dieser Umschlag indiziert die Reaktion zu Chlorotris(triphenylphosphan)-rhodium(I), das später als dunkelrote Kristalle erhalten wird. Bei schnellem Erhitzen der Suspension in Schritt **B** erfolgt der Farbumschlag schon bei etwa 60 °C. Später entstehen dann beim Abkühlen so kleine Kristalle, dass die Filtrationshilfsmittel wie Fritten verstopfen oder die Kristalle durch das Filter nicht zurückgehalten werden können. Wenn man die Temperatur so führt, dass zunächst einige Zeit (bei Ansätzen im 100 g Bereich ½ h) von Raumtemperatur (18 bis 20 °C) auf 25-35° C erwärmt wird, dann in einer weiteren Stufe ca. 3 h lang von 25-35 auf 68-79°C erhitzt wird, findet der Farbumschlag erst bei 68-79°C statt. Die resultierenden Kristalle haben eine reproduzierbar genügende Größe, um problemlos filtriert zu werden und genügen auch was die Reinheit angeht den Anforderungen und Spezifikationen der Katalysatoranwender.

In einer bevorzugten Ausführungsform des Verfahrens wird das RhCl₃ in Form einer wässrigen Lösung aus einem Recyclingprozess eingesetzt. Dadurch wird überraschenderweise die Qualität der erhaltenen Kristalle beeinflusst. Entscheidend scheint dabei die Rolle des Wassers zu sein. Triphenylphosphin löst sich in Isopropanol, ist jedoch in Wasser nahezu unlöslich. Durch den Verdünnungseffekt bei Zusatz einer etwa 10 %igen, wässrigen RhCl₃-Lösung wird die Löslichkeit von Triphenylphosphin herabgesetzt. Dies ist im Ausführungsbeispiel 3 dargestellt, nach dem gut filtrierbare, spezifikationsgerechte Kristalle in guter Ausbeute hergestellt werden.

Als vorteilhaft kann es sich alternativ dazu erweisen, Triphenylphosphin nicht vollständig in Alkohol zu lösen, sondern als alkoholische Suspension einzusetzen. Triphenylphosphin löst sich nämlich bei niedrigen Temperaturen nicht sofort vollständig, sondern geht erst mit steigender Temperatur langsam in Lösung und ist dann erst für die Reaktion mit RhCl₃ verfügbar. Durch diesen Effekt ist das Molverhältnis zwischen RhCl₃ und Triphenylphosphin verschieden von den eingebrachten Mengen, und auch hier wird durch die anfängliche Armut an Triphenylphosphin die Kristallgröße wiederum überraschenderweise günstig beeinflusst.

Die Erfindung betrifft somit auch ein Verfahren zur Herstellung von Chlorotris(triphenylphosphan)rhodium(I), dadurch gekennzeichnet, dass
- eine Lösung von RhCl₃ in Wasser hergestellt wird oder eine RhCl₃-Lösung aus einem Recyclingprozess bereitgestellt wird,
- Isopropanol unter Schutzgas vorgelegt wird,
- die RhCl₃-Lösung zugegeben wird,
- Triphenylphosphin als alkoholische Lösung oder Suspension im Überschuss zugegeben wird,

- **A**: die erhaltene Mischung in einer ersten Stufe von 20 auf 25 - 35°C erwärmt wird,
- **B**: weiter in einer zweiten Stufe von 30 bis 68-79 °C erwärmt wird, ein Farbumschlag nach weinrot stattfindet,
- **C**: bei 80 bis 110°C unter Rückfluss gekocht wird, - die erhaltene Lösung abgekühlt wird, - die ausgefallenen Kristalle filtriert, mit dem Alkohol und/oder Wasser und/oder Petrolether gewaschen und anschließend getrocknet werden.

Ein Vorteil einer Ausführungsform des Verfahrens ist es, dass die gesamte Synthese innerhalb eines einzigen Tages ablaufen kann, wenn wie im Ausführungsbeispiel 4 beschrieben die Reaktion bei Raumtemperatur gestartet wird, ohne vorherige Kühlung des Lösemittels. Dies erweist sich in der Praxis als erheblicher ökonomischer Vorteil.

Auch bei der Aufarbeitung hat es sich als von Vorteil erwiesen, nach Stufe C die Lösung aktiv zu kühlen. Dies hat überraschenderweise keinen ungünstigen Einfluss auf die Kristallgröße und bringt durch die Zeitersparnis einen gegenüber der zur Kühlung aufgewandten Energie großen Vorteil.

Es ist weiterhin möglich, durch Begrenzung der Lösungsmittelmenge, wie in Beispiel 5 beschreiben, eine verbesserte Raum-Zeit-Ausbeute zu erreichen. Eventuell bei dieser Verfahrensweise entstehende kleinere Kristalle können mittels einer Drucknutsche gefiltert werden, so dass sich bei der Produktion größerer Mengen insgesamt ein sehr ökonomisches Verfahren ergibt.

Ferner kann der Trocknungsprozess des kristallinen Produkts dahingehend optimiert werden, dass mit Isopropanol und ggf. Petroleumbenzin gewaschen wird. Dadurch sind im industriellen Maßstab Trocknungszeiten von nur einem Tag möglich.

Die folgenden Beispiele dienen der Erläuterung der Erfindung, ohne sie zu beschränken. Ausbeuten werden in % bezogen auf eingesetztes Rhodium angegeben.

### Beispiele: Vergleichsbeispiel: Stand der Technik, Wilkinson Vorschrift

Synthese nach Inorg. Synth 10, 67 (1967) und gleichlautend Inorg. Synth 28, 77 (1990)ⁱ

In einem 500 ml Rundkolben mit Gaseinleitungsrohr, Rückflusskühler und Gasausleitung werden 2 g Rhodium(III)-chlorid-Trihydrat in 70 ml Ethanol gelöst. Eine Lösung von 12 g frisch aus EtOH umkristallisiertem Triphenylphospin in 350 ml heißem Ethanol wird hinzugefügt und der Kolben mit Stickstoff gespült. Die Lösung wird zwei Stunden am Rückfluss gekocht, und das kristalline Produkt wird aus der heißen Lösung auf einer Fritte filtriert. Nach Waschen mit kleinen Portionen von 50 ml wasserfreiem Ether werden 6.25 g erhalten (Ausbeute: 88% bezogen auf Rh).

### Beispiel 1: Wilkinson Vorschrift mit erfindungsgemäßer Temperaturführung Stufe B und C

Apparaturen 1 und 2: Rundkolben mit Gaseinleitung, Rückflusskühler und Gasausleitung.

In Apparatur 2 werden unter Argon 24 g (0,0916 mol) Triphenylphosphin vorlegt und in 700 ml Ethanol heiß gelöst. Bei 40°C hat sich bereits das gesamte Triphenylphosphin gelöst.

In Apparatur 1 werden in der Zwischenzeit 4 g (0,0158 mol) RhCl₃-Hydrat vorgelegt und in 140 ml Ethanol suspendiert. Zu der rotbraunen Suspension gibt man nun unter Argondurchfluss die 40 °C warme Triphenylphosphin-Lösung. Es entsteht eine dunkelrote Lösung mit einer Temperatur von 36 °C. Die Lösung wird nun langsam zum Sieden erhitzt.

| Temperatur: | Aufheizzeit: | Beobachtung: |
|---|---|---|
| 36 - 62 °C | 55 min | orange Suspension |
| 62 - 67 °C | 25 min | Suspension wird allmählich dunkler und verfärbt sich über braun nach weinrot |
| 67 °C | | Reaktion hat stattgefunden, es ist eine dunkel weinrote Suspension entstanden (Umschlagspunkt) |
| 67 - 79 °C | 70 min | dunkel weinrote Suspension |
| 79 - 80 °C | | Siedebeginn, Suspension wird 2 h am Rückfluss gekocht |

Die erhaltene Suspension wird mittels Eisbad auf 20 °C abgekühlt und anschließend über eine G3-Fritte filtriert. Das weinrote Produkt wird auf der Fritte 2 x mit je 50 ml Ethanol nachgewaschen und im Membranpumpenvakuum getrocknet. Es wurden 14,549 g weinroter Feststoff erhalten. Die rechnerischen Ausbeute beträgt 99,2 %.

### Beispiel 2

4 g Rh (0,0389 mol) in Form einer wässrigen RhCl₃-Lösung mit 23% Rhodium-Gehalt werden in einem Rundkolben mit Gasein- und -ausleitung sowie Rückflusskühler unter Argon in 490 ml Isopropanol gelöst und mittels Eisbad auf 5 °C abgekühlt.

Bei dieser Temperatur wird unter Rühren 50 g (0,191 mol) Triphenylphosphin zugegeben und anschließend die Suspension langsam bis zum Sieden erhitzt.

| Temperatur: | Aufheizzeit: | Beobachtung: |
|---|---|---|
| 5 °C | | dunkel rotbraune Lösung mit ungelöstem Triphenylphosphin |
| 10 - 31 °C | 1 h | braune Suspension |
| 25 - 70 °C | 3,25 h | orange Suspension |
| 70 - 75 °C | 30 min | Suspension wird allmählich dunkler und verfärbt sich über braun nach weinrot |
| 75 °C | | Reaktion hat stattgefunden, es ist eine weinrote Suspension entstanden (Umschlagspunkt) |
| 75 - 79 °C | 15 min | weinrote Suspension |
| 79 - 80 °C | | Siedebeginn, Suspension wird 1 h am Rückfluss gekocht |

Die erhaltene Suspension wird über Nacht ohne aktive Kühlung abkühlen lassen. Am nächsten Tag wird mittels Eisbad auf 10 °C abgekühlt und anschließend über eine G3-Fritte filtriert. Das Produkt wird auf der Fritte mit 235 ml Isopropanol und 100 ml Petroleumbenzin nachgewaschen und im Membranpumpenvakuum getrocknet.

Es werden 35,81 g (0,0387 mol) weinroter feinkristalliner Feststoff erhalten.

Die rechnerischen Ausbeute beträgt 99,4 %.

### Beispiel 3

Einen Tag vor der eigentlichen Synthese werden 4 g Rh (0,0389 mol) in Form von RhCl₃-Hydrat (Rh-Gehalt 40,7 %) in 26 ml vollentsalztem Wasser über Nacht gelöst. In einem Rundkolben mit Gasein- und -ausleitung sowie Rückflusskühler werden unter Argon 490 ml Isopropanol vorgelegt. Die RhCl₃-Lösung wird zugegeben. Dann werden 50 g (0,191 mol) Triphenylphosphin zugegeben und anschließend die Suspension langsam bis zum Sieden erhitzt.

| Temperatur: | Aufheizzeit: | Beobachtung: |
|---|---|---|
| 21 °C | | braune Suspension |
| 25 - 70 °C | 4 h | orange Suspension |
| 70 - 75 °C | 40 min | Suspension wird allmählich dunkler und verfärbt sich über braun nach weinrot |
| 75 °C | | Reaktion hat stattgefunden, es ist eine weinrote Suspension entstanden (Umschlagspunkt) |
| 75 - 79 °C | 25 min | weinrote Suspension |
| 79 - 80 °C | | Siedebeginn, Suspension wird 1 h am Rückfluss gekocht |

Die erhaltene Suspension wird über Nacht ohne aktive Kühlung abkühlen gelassen. Am nächsten Tag wird mittels Eisbad auf 20 °C abgekühlt und anschließend über eine G3-Fritte filtriert. Das Produkt wird auf der Fritte mit 405 ml vollentsalztem Wasser und 235 ml Isopropanol nachgewaschen. Anschließend wird der Filterkuchen im Membranpumpenvakuum getrocknet. Es wurden 35,82 g weinroter feinkristalliner Feststoff erhalten.

Die rechnerische Ausbeute beträgt 99,4 %.

### Beispiel 4

4 g Rh (0,0389 mol) in Form der wässrigen RhCl₃-Lösung mit 23 % Rh-Gehalt wird mit Wasser auf einen Rh-Gehalt von 10 % verdünnt.

490 ml Isopropanol werden mit der RhCl₃-Lösung zusammengegeben. Dann gibt man 50 g (0,191 mol) Triphenylphosphin in den Kolben und erhitzt stufenweise zum Sieden.

| Temperatur: | Aufheizzeit: | Beobachtung: |
|---|---|---|
| 19 °C | | dunkel rotbraune Lösung mit ungelöstem Triphenylphosphin |
| 25 - 30 °C | 30 min | braune Suspension |
| 30 - 74 °C | 3,25 h | orange Suspension |
| 74 - 78 °C | 30 min | Suspension wird allmählich dunkler und verfärbt sich über braun nach weinrot |
| 78 °C | | Reaktion hat stattgefunden, es ist eine weinrote Suspension entstanden (Umschlagspunkt) |
| 78 - 79 °C | 15 min | weinrote Suspension |
| 79 - 80 °C | | Siedebeginn, Suspension wird 1 h am Rückfluss gekocht |

Die erhaltene Suspension wird mittels Eisbad auf 20 °C abgekühlt und anschließend über eine G3-Fritte filtriert. Das Produkt wird auf der Fritte mit 235 ml Isopropanol und 100 ml Petroleumbenzin nachgewaschen und im Membranpumpenvakuum getrocknet.

Man erhält 35,47 g weinroten feinkristallinen Feststoff.

Die Ausbeute beträgt 98,5 %.

### Beispiel 5

### (Wiederholung des Beispiels 4, jedoch mit 30 % weniger Lösungsmittel und Wasser)

343 ml Isopropanol und 4 g Rh in Form der RhCl₃-Lösung mit einem Rh-Gehalt von 10 % werden zusammen mit Triphenylphosphin im Kolben vorgelegt und analog Beispiel 4 ab Raumtemperatur stufenweise zum Sieden erhitzt.

| Temperatur: | Aufheizzeit: | Beobachtung: |
|---|---|---|
| 19 °C | | dunkel rotbraune Lösung mit ungelöstem Triphenylphosphin |
| 26 - 34 °C | 45 min | braune Suspension |
| 34 - 68 °C | 3 h | orange Suspension |
| 68 - 75 °C | 45 min | Suspension wird allmählich dunkler und verfärbt sich über braun nach weinrot |
| 75 °C | | Reaktion hat stattgefunden, es ist eine weinrote Suspension entstanden (Umschlagspunkt) |
| 75 - 79 °C | 15 min | weinrote Suspension |
| 79 - 80 °C | | Siedebeginn, Suspension wird 1 h am Rückfluss gekocht |

Die erhaltene Suspension wird mittels Eisbad auf 20 °C abgekühlt und anschließend über eine G3-Fritte filtriert. Das Produkt wird auf der Fritte mit 235 ml Isopropanol und 100 ml Petroleumbenzin nachgewaschen und im Membranpumpenvakuum getrocknet.

Es werden 34,44 g weinroter feinkristalliner Feststoff erhalten.

Die Ausbeute beträgt 95 %.

## Patentansprüche

1. Verfahren zur Herstellung von Chlorotris(triphenylphosphan)rhodium(I) durch Umsetzung von RhCl₃-Lösung mit Triphenylphosphin
in Gemischen eines C2-C5 Alkohols mit Wasser
anschließendes Abkühlen und Filtrieren des erhaltenen kristallinen Niederschlags, wobei, die Mischung der Reaktanden
**AB** 3/2 bis mehrere Stunden von Zimmertemperatur auf 68-79°C erwärmt wird, wo- bei ein Farbumschlag nach weinrot stattfindet, und die Mischung
**C** bei 80 bis 110°C gehalten wird, wobei bei Verwendung von Ethanol als Lö- sungsmittel die untere Temperaturgrenze 78°C beträgt.

2. Verfahren nach Anspruch 1, **dadurch gekennzeichnet, dass** die Mischung der Reaktanden in der Weise behandelt wird, dass
**A** in einer ersten Stufe auf 25 - 35°C erwärmt wird,
**B** weiter in einer zweiten Stufe von 25 - 35°C auf 68 - 79° erwärmt wird, wobei ein Farbumschlag nach weinrot stattfindet,
**C** bei 80 bis 110°C gehalten wird, wobei bei Verwendung von Ethanol als Lö- sungsmittel die untere Temperaturgrenze 78°C beträgt.

3. Verfahren zur Herstellung von Chlorotris(triphenyl-phosphan)rhodium(I), **dadurch gekennzeichnet, dass**
- eine Lösung von RhCl₃ in Wasser hergestellt wird oder eine RhCl₃-Lösung aus einem Recyclingprozess bereitgestellt wird,
- Isopropanol unter Schutzgas vorgelegt wird,
- die RhCl₃-Lösung zugegeben wird,
- Triphenylphosphin als alkoholische Lösung oder Suspension im Überschuss zugegeben wird,
**A** die erhaltene Mischung in einer ersten Stufe von 20 auf 25 - 35°C erwärmt wird,
**B** weiter in einer zweiten Stufe von 30 bis 68-79 °C erwärmt wird, ein Farbumschlag nach weinrot stattfindet,
**C** bei 80 bis 110°C unter Rückfluss gekocht wird, - die erhaltene Lösung abgekühlt wird, - die ausgefallenen Kristalle filtriert, mit dem Alkohol und/oder Wasser und/oder Petrolether gewaschen und anschließend getrocknet werden.

4. Verfahren gemäß einem der Ansprüche 2 und 3, **dadurch gekennzeichnet, dass** die Stufen A ½ bis 1 h, B 1 bis 4 h und C½ bis 1 h dauern.

## Claims

1. Process for the production of chlorotris(triphenyl phosphane) rhodium(I) by reacting RhCl₃ solution with triphenyl phosphine
in mixtures of a C2-C5 alcohol with water,
subsequent cooling and filtering of the crystalline precipitate obtained, the mixture of reactants
**AB** being heated 3/2 to several hours from room temperature to 68 - 79 °C, a colour change to wine red taking place, and the mixture
**C** being held at 80 to 110 °C, the lower temperature limit being 78 °C in the case of ethanol being used as solvent.

2. Process according to claim 1 **characterised in that** the mixture of the reactants is treated in such a way that
**A** is heated in a first stage to 25 - 35 °C,
**B** is heated further in a second stage from 25 - 35 °C to 68 - 79 °C, a colour change to wine red taking place,
**C** is held at 80 to 110 °C, the lower temperature limit being 78 °C in the case of ethanol being used as solvent.

3. Process for the production of chlorotris(triphenyl phosphane) rhodium(I) **characterised in that**
- a solution of RhCl₃ in water is produced or a RhCl₃ solution is provided from a recycling process,
- isopropanol is provided under protective gas,
- the RhCl₃ solution is added,
- triphenyl phosphine is added as an alcoholic solution or suspension in excess,
**A** the mixture obtained is heated in a first stage from 20 to 25 - 35 °C,
**B** is heated further in a second stage from 30 to 68 - 79 °C, a colour change to wine red taking place,
**C** is refluxed at 80 to 110 °C, - the solution obtained is cooled, - the precipitated crystals are filtered, washed with the alcohol and/or water and/or petroleum ether and subsequently dried.

4. Process according to one of claims 2 and 3 **characterised in that** stage A lasts ½ to 1h, B 1 to 4h and C ½ to 1 h.

## Revendications

1. Procédé de préparation de chlorotris(triphénylphosphane)- rhodium(I) par mise à réagir d'une solution de RhCl₃ avec de la triphénylphosphine dans des mélanges d'un alcool en C2-C5 avec de l'eau, refroidissement subséquent et filtration du précipité cristallin obtenu, le mélange des réactifs
**AB** étant chauffé pendant 3/2 h à plusieurs heures de la température ambiante à 68-79°C, un virage au rouge vin ayant lieu, et le mélange
**C** étant maintenu à 80 à 110°C, la limite inférieure de température étant de 78°C lors de l'utilisation d'éthanol comme solvant.

2. Procédé selon la revendication 1, **caractérisé en ce que** le mélange des réactifs est traité de telle manière qu'il
**A** est chauffé au cours d'une première étape à 25-35°C,
**B** est en outre porté au cours d'une seconde étape de 25-35°C à 68-79°, un virage au rouge vin ayant alors lieu,
**C** est maintenu à 80 à 110°C, la limite inférieure de température étant de 78°C lors de l'utili- sation d'éthanol comme solvant.

3. Procédé de préparation de chlorotris(triphénylphosphane)rhodium(I), **caractérisé en ce que**
- une solution de RhCl₃ dans de l'eau est préparée ou une solution de RhCl₃ est mise à disposition à partir d'un procédé de recyclage,
- de l'isopropanol sous gaz protecteur est présenté,
- la solution de RhCl₃ est ajoutée,
- de la triphénylphosphine sous forme de solution ou de suspension alcoolique est ajoutée en excès,
**A** le mélange obtenu est chauffé au cours d'une première étape de 20 à 25-35°C,
**B** il est porté en outre au cours d'une seconde étape de 30 à 68-79°C, un virage au rouge vin ayant lieu,
**C** il est chauffé à reflux à 80 à 110°C,
- la solution obtenue est refroidie,
- les cristaux précipités sont filtrés, lavés à l'alcool et/ou l'eau et/ou l'éther de pétrole et ensuite séchés.

4. Procédé selon l'une des revendications 2 et 3, **caractérisé en ce que** l'étape A dure de ½ à 1 h, B de 1 à 4 h et C de ½ à 1 h.
